(19) Europäisches Patentamt
European Patent Office
Office européen des brevets

(11) **EP 2 269 016 B1**

(12) **FASCICULE DE BREVET EUROPEEN**

(45) Date de publication et mention
de la délivrance du brevet:
**25.10.2017 Bulletin 2017/43**

(21) Numéro de dépôt: **09734896.5**

(22) Date de dépôt: **14.04.2009**

(51) Int Cl.:
*G01J 5/06* *(2006.01)*     *F25B 9/00* *(2006.01)*

(86) Numéro de dépôt international:
**PCT/EP2009/054370**

(87) Numéro de publication internationale:
**WO 2009/130136 (29.10.2009 Gazette 2009/44)**

(54) **SYSTÈME OPTRONIQUE IR À MAINTENANCE PRÉDICTIVE DU NOMBRE DE CYCLES AVANT PANNE**

OPTRONISCHES INFRAROTSYSTEM MIT VORBEUGENDER WARTUNG HINSICHTLICH DER ANZAHL VON ZYKLEN VOR DEM AUSFALL

OPTRONIC INFRARED SYSTEM WITH PREDICTIVE MAINTENANCE IN TERMS OF THE NUMBER OF CYCLES BEFORE BREAKDOWN

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **25.04.2008 FR 0802336**

(43) Date de publication de la demande:
**05.01.2011 Bulletin 2011/01**

(73) Titulaire: **THALES**
**92400 Courbevoie (FR)**

(72) Inventeur: **BIHANNIC, Didier**
**F-91520 Egly (FR)**

(74) Mandataire: **Henriot, Marie-Pierre et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**JP-A- 6 307 924     US-A- 5 734 593**
**US-A- 6 016 659**

**Description**

Le domaine de l'invention est celui des systèmes optroniques tels que des caméras thermiques, équipés de détecteurs infrarouges (« IR ») refroidis aussi désignés détecteurs-refroidisseurs.

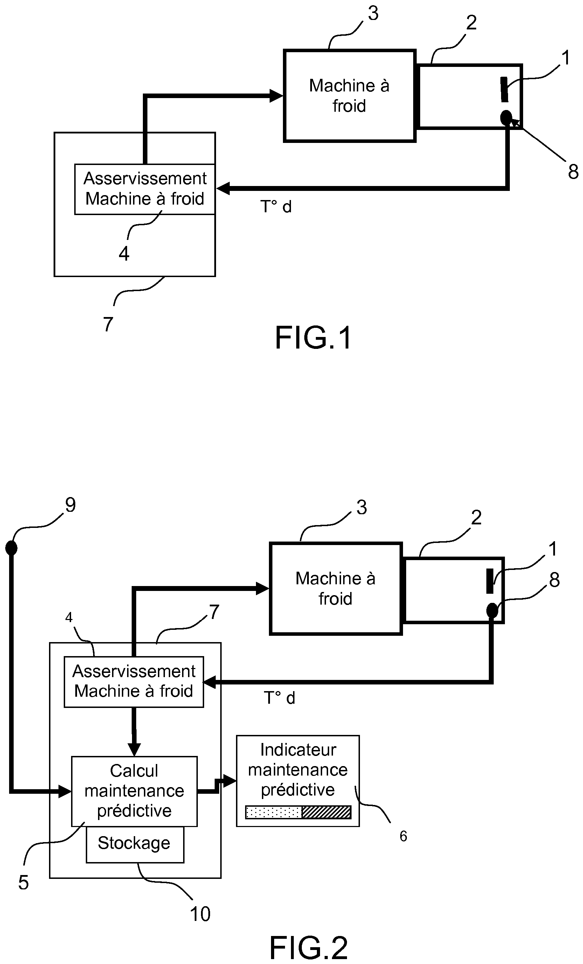

La figure 1 présente une conception classique de détecteur-refroidisseur qui comporte :

- un détecteur IR 1 placé dans une enceinte à vide (cryostat 2) qui maintient la température de cette enceinte à une température de fonctionnement du détecteur soit environ -200 °C
- une machine à froid 3 qui utilise par exemple de l'hélium et fournit au cryostat 2 le froid nécessaire pour amener (en général baisser) sa température d'une température ambiante à la température de fonctionnement. Le temps nécessaire pour atteindre la température de fonctionnement est désigné «Temps de Mise en Froid» (TMF). La performance de l'ensemble est mesurée sur une plage de température significative : de -173°C à -190°C. Le TMF pour passer de - 173°C à -190°C est typiquement de quelques dizaines de secondes.
- un dispositif d'asservissement 4 de cette machine à froid en fonction de la température Td du détecteur fournie par un capteur 8.

Les détecteurs-refroidisseurs utilisés aujourd'hui sont fragiles, hétérogènes en ce sens que deux détecteurs-refroidisseurs identiques ne se comportent pas de la même manière, et coûteux. La maintenance actuelle se limite à constater la panne lorsqu'elle survient c'est-à-dire en détectant une sortie de spécification du temps de mise à froid. La panne entraîne des indisponibilités et de l'insatisfaction de la part des utilisateurs. De plus les coûts de maintenance sont élevés. Les documents US 5 734 593 A, JP6307924 A et US 6 016 659 A divulguent des détecteurs-refroidisseurs de l'art antérieur. En conséquence, il existe à ce jour un besoin pour un système permettant de pallier les inconvénients précités sans pour autant augmenter son encombrement.

Le principe qui sous-tend l'invention consiste à anticiper les dysfonctionnements c'est-à-dire à réaliser une maintenance prédictive afin de limiter les pannes. Cette maintenance prédictive est basée sur un suivi de l'état de santé du refroidisseur-détecteur. Plus précisément elle est effectuée à partir de la mesure de la dérive du temps de mise à froid. En effet cette dérive du TMF peut trahir :

- une fuite de l'hélium de la machine à froid,
- une pollution de l'hélium,
- une dégradation du vide du cryostat,

avec pour conséquence une fatigue de la machine à froid sous forme de :

- dégradation des éléments mécaniques de la machine à froid,
- dégradation de l'isolation thermique,
- variation de la température interne du système optronique lors du démarrage de la mise en froid,
- variation de la température initiale du détecteur lors du démarrage de la mise en froid.

Le temps de mise en froid augmente lorsque la machine à froid fatigue. A chaque démarrage de la machine à froid on mesure ce TMF. L'invention est basée sur un traitement statistique de ces données. Ceci permet de prédire le potentiel de la machine c'est-à-dire le nombre de démarrages avant que le TMF ne dépasse une valeur seuil représentative d'une panne imminente, et ainsi de maîtriser la disponibilité opérationnelle du détecteur-refroidisseur.

Un des inconvénients de ce traitement statistique réside dans le stockage des données car les systèmes optroniques ont peu de mémoire disponible pour la maintenance. L'algorithme permet de s'affranchir des problèmes de stockage en sauvegardant des données cumulées mais pas les mesures de températures, ni les TMF. L'algorithme permet à chaque détecteur-refroidisseur de construire seul son propre modèle de comportement. Le système est « auto-adaptatif ».

Plus précisément l'invention a pour objet le procédé de maintenance de la revendication 1 ainsi que la caméra thermique de la revendication 6. Cette solution permet donc avec un minimum d'espace mémoire de déterminer le potentiel résiduel du détecteur-refroidisseur. Il en résulte notamment une économie de l'espace mémoire nécessaire aux autres applications du système optronique, une meilleure maîtrise du détecteur-refroidisseur par l'utilisateur, une amélioration des performances opérationnelles, une augmentation de l'autonomie par une diminution de l'énergie consommée par le détecteur refroidisseur.

On se donne alors l'opportunité de :

- déclencher une opération de maintenance préventive car les défauts décelés sont réversibles,
- donner le choix à l'utilisateur de partir en mission avec un détecteur-refroidisseur en bon état plutôt qu'un autre au potentiel trop entamé.

Il comprend avantageusement un indicateur de maintenance prédictive relié aux moyens de calcul.

La panne est typiquement représentée par un TMF maximal prédéterminé.

Selon une caractéristique de l'invention, le calcul est réalisé à partir d'une somme des TMF, d'un nombre de mises en froid cumulé, et d'un cumul du produit du n°du cycle considéré par le TMF correspondant.

De préférence, le calcul est réalisé pour différentes classes de température $T_S$ du système.

Avantageusement, chaque classe de température fait l'objet de calculs indépendants.

La dérive du TMF est typiquement une fonction linéaire du nombre de cycles.

Ce système optronique est une caméra thermique.

D'autres caractéristiques et avantages de l'invention apparaîtront à la lecture de la description détaillée qui suit, faite à titre d'exemple non limitatif et en référence aux dessins annexés dans lesquels :

la figure 1 déjà décrite représente schématiquement un système optronique selon l'état de la technique,
la figure 2 représente schématiquement un système optronique selon l'invention,
la figure 3 est un organigramme présentant le calcul du nombre de cycles avant défaut,
la figure 4 représente schématiquement une courbe de température du détecteur en fonction du temps.

D'une figure à l'autre, les mêmes éléments sont repérés par les mêmes références.

Le système selon l'invention représenté figure 2, comprend en plus du système de l'état de la technique, un capteur 9 de la température Ts interne au système et des moyens de calcul 5 et de stockage de données 10, ainsi qu'un indicateur 6 de maintenance prédictive.

L'invention est basée sur un traitement statistique des TMF calculés lors de chaque démarrage de la machine à froid 3. Cela permet de prédire le potentiel de démarrages de la machine à froid avant panne, et ainsi de maîtriser la disponibilité opérationnelle du détecteur-refroidisseur.

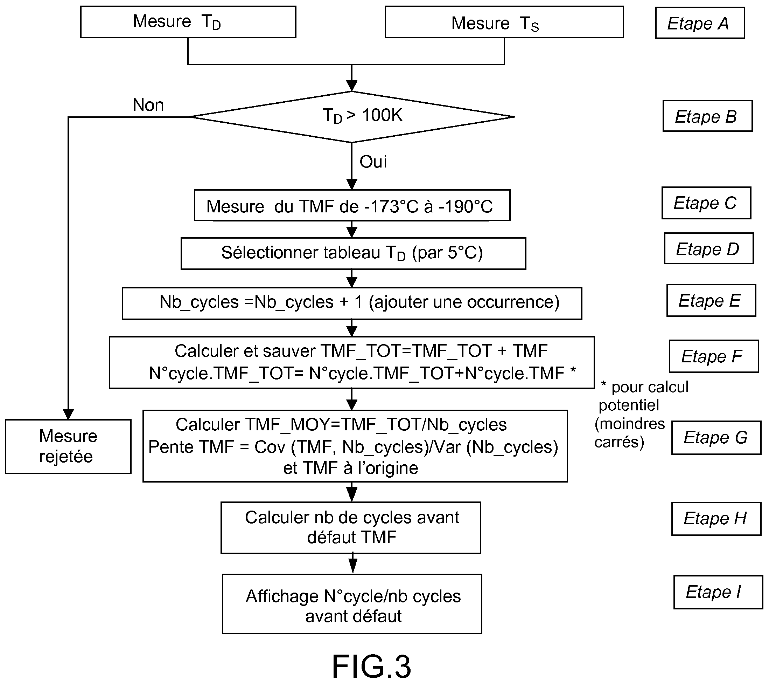

Le potentiel est exprimé par le rapport du nombre de cycles (de démarrage-arrêt) courant sur le nombre de cycles prévisionnels avant atteinte d'un TMF maximal acceptable. Ce calcul est décrit en relation avec l'organigramme de la figure 3.

Ce calcul est basé sur la mesure de la température $T_D$ du détecteur et de la température interne $T_S$ du système optronique (étape A). Ces mesures sont ensuite validées (étape B) c'est-à-dire ne sont prises en compte que dans certaines conditions. En effet, les éléments suivants perturbent la mesure du TMF. Il faut donc s'affranchir de ces perturbations.

a. Une variation de la température interne du système optronique $T_S$ lors du démarrage de la mise en froid.
Le calcul est réalisé pour différentes classes de température $T_D$ ou $T_S$, par exemple par pas de 5°C. Chaque classe de température fait l'objet d'un calcul de moyenne indépendant. Il n'est donc pas utile de ramener les mesures à une température de référence. De plus, on considère que pour un système optronique donné, les conditions d'emploi sont assez reproductibles et donc centrées sur 2 ou 3 classes de températures. L'exemple décrit par la suite est basé sur des classes de température $T_D$ du détecteur.
b. Une variation de la température initiale du détecteur lors du démarrage de la mise en froid.
Si la mise en froid est réalisée peu de temps après un arrêt, le TMF peut être très court (le cryostat reste froid quelques heures après l'arrêt de la machine à froid « MAF »). Ce TMF n'est alors pas représentatif car la MAF ne réalise pas un cycle complet de mise en froid. Ces cas sont éliminés par comparaison de la température $T_D$ initiale avec la température interne $T_S$ du système. Si $T_D$ s'écarte trop de $T_S$, la mesure n'est pas prise en compte.

Une fois les mesures validées, un calcul du nombre de cycles avant panne est effectué pour chaque classe de températures. Chaque classe de températures fait l'objet de calculs indépendants. Il n'est donc pas utile de ramener les mesures à une température de référence.

Pour chaque classe de température on utilise les données suivantes :

- TMF_TOT qui est la somme de tous les TMF dans la classe de température considérée,
- Nb-cycles qui est le nombre de mises en froid cumulé dans la classe de température considérée,
- (N° cycle.TMF)-TOT qui est le cumul du produit du n° du cycle considéré par le TMF correspondant, dans la classe de température considérée.

Ces données sont des données cumulatives dont la valeur évolue en fonction de la mesure courante. Il n'y a donc pas de sauvegarde de chaque mesure de TMF, $T_D$ et $T_S$. Ceci permet de limiter l'espace mémoire dédié à cette prédiction d'évolution du TMF.

Comme on va le voir plus loin, ces données cumulatives sont sauvegardées dans un tableau de K colonnes, K étant le nombre de classes de températures différentes, les lignes du tableau correspondant à ces données. Le nombre K est par exemple déterminé par le nombre de tranches de 5°C.

On calcule également le TMF moyen, TMF_MOY qui est égal à TMF_TOT / Nb-cycles ; cette donnée n'est pas sauvegardée dans le tableau.

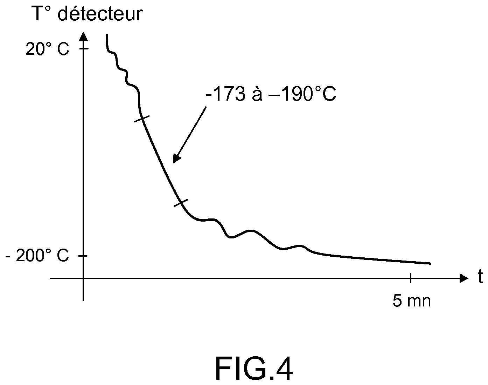

On se reporte à l'organigramme de la figure 3. Le TMF est mesuré dans une fourchette de température prédéfinie (étape C). Celle-ci est définie à partir de la courbe de la température du détecteur $T_D$ en fonction du temps, schématiquement représentée figure 4 : cette fourchette correspond à la portion quasi-linéaire de la courbe typiquement comprise entre -173 et -190 °C.

La colonne du tableau de sauvegarde des données est sélectionnée en fonction de la température $T_D$ du détecteur (étape D).

Diverses données sont alors calculées et sauvegardées dans ladite colonne du tableau en vue du calcul de l'évolution du temps de mise en froid : Nb-cycles (étape E), TMF_TOT, (N°cycle.TMF)_TOT (étapes F et G). Cette évolution est modélisée par

$$TMF = a.N°cycle + b$$

La pente « a » est estimée par la méthode des moindres carrés mais en s'affranchissant du stockage de toutes les données.

$$a = Covariance\ (TMF,\ Nb\_cycles)\ /\ Variance\ (Nb\_cycles) \qquad (étape\ G)$$

avec :

$$Variance\ (Nb\_cycles) =$$
$$[Somme\ (N°\_cycle^2)/Nb\text{-}cycles] - Espérance(Nb\_cycles)^2$$

$$Variance\ (Nb\_cycles) =$$
$$[Somme\ (1^2+2^2+3^2+4^2…)/Nb\_cycles] - [Somme(1+2+3+4+…)/Nb\_cycles]^2$$

Les suites arithmétiques permettent de généraliser l'expression

$$Variance\ (Nb\_cycles) =$$
$$[Nb\_cycles.(Nb\_cycles+1).(2.Nb\_cycles+1)\ /\ 6\ /\ Nb\_cyles] -$$
$$[Nb\_cycles.(1+Nb\_cycles)/2/Nb\_cycles]^2$$

$$Variance\ (Nb\_cycles) =$$
$$[(Nb\_cycles+1).(2.Nb\_cycles+1)\ /\ 6\ ]-.[(1+Nb\_cycles)\ /\ 2]^2$$

$$Covariance\ (TMF,\ Nb\_cycles) =$$
$$Espérance(TMF.N°\_cycle)-TMF\_moy.Nb\_cycles\_moy$$

Avec

$$Espérance(TMF.N°cycle) = (N°cycle.TMF)\_TOT\ /\ Nb\_cycles$$

TMF_moy est calculé à chaque cycle,

$$Nb\_cycles\_moy = (1 + Nb\_cycles)/2$$

$$Covariance\ (TMF, Nb\_cycles) =$$
$$[(N°cycle.TMF)\_TOT\ /\ Nb\_cycles] - [TMF\_moy\ .\ (1 + Nb\_cycles)/2]$$

La valeur de la pente « a » du TMF et le TMF à l'origine de la droite « b » sont alors mis à jour à chaque nouveau cycle (étape G).

L'extrapolation de la droite jusqu'au TMF limite acceptable au regard de la spécification, est alors déterminée. Le potentiel est exprimé par le rapport du nombre de cycles courant sur le nombre de cycles prévisionnels avant atteinte du TMF max acceptable (étape H), et affiché sur une interface utilisateur (étape I). Cette interface utilisateur 6 peut être une interface sonore et/ou visuelle.

Cette méthode permet de s'affranchir des problèmes de disparité liés à la production. Chaque système optronique dispose d'une analyse qui lui est propre. Il n'y a pas de modèle générique. Au fur et à mesure des mesures du TMF, le système optronique « construit » son modèle d'évolution du TMF.

Cette solution permet donc avec un minimum d'espace mémoire de déterminer le potentiel résiduel du détecteur-refroidisseur. Il en résulte notamment :

- une économie de l'espace mémoire (l'espace mémoire nécessaire est de 2 Ko) qui est ainsi disponible pour d'autres applications du système optronique,
- une meilleure maîtrise du détecteur-refroidisseur par l'utilisateur,
- une amélioration des performances opérationnelles,
- une augmentation de l'autonomie par une diminution de l'énergie consommée par le détecteur refroidisseur.

**Revendications**

1. Procédé de maintenance d'une caméra thermique équipée :

 - d'un détecteur-refroidisseur qui comprend :

  i. une machine à froid (3),
  ii. un cryostat (2),
  iii. un détecteur IR (1) placé dans le cryostat,
  iv. un premier capteur (8) de la température $T_D$ du détecteur IR,

 - d'une carte de traitement (7) qui comporte des moyens d'asservissement (4) de la machine à froid en fonction de la température $T_D$,

 **caractérisé en ce qu'**il comprend un nombre « nb-cycles » de cycles de mise en froid de la machine à froid (3) désignés cycles « Marche-Arrêt » avec pour chaque cycle, les étapes suivantes :

 - de calcul de la température $T_S$ interne à la caméra au moyen d'un deuxième capteur (9) de la température $T_S$ interne à la caméra,
 - et de calcul par la carte de traitement du temps de mise à froid TMF à partir des températures $T_D$ et $T_S$, et à l'issue de ces « nb-cycles » cycles « Marche-Arrêt » :
 - une étape de calcul par la carte de traitement :

  ◦ de l'évolution de la dérive du temps de mise à froid TMF, en fonction de « nb-cycles »,
  ◦ d'un nombre de cycles « Marche-Arrêt » avant panne, en fonction de ladite évolution de la dérive du TMF par rapport à un TMF maximal prédéterminé représentatif d'une panne,

 - une étape de stockage de données utilisées dans lesdits calculs, ces données étant des données cumulées et non pas les mesures de températures $T_D$ et $T_S$ ni lesdits TMF.

2. Procédé de maintenance selon la revendication précédente, **caractérisé en ce qu'**à chaque cycle « Marche-Arrêt » du détecteur-refroidisseur, il comprend une étape de calcul du produit du TMF par le n° du cycle, et à l'issue des « nb-cycles » cycles, une étape de stockage des données cumulées suivantes :

- « nb-cycles »,
- la somme des TMF sur le nombre « nb-cycles » de cycles considéré,
- la somme des produits du TMF par le n° du cycle.

**3.** Procédé de maintenance selon l'une des revendications précédentes, **caractérisé en ce que** les étapes sont réitérées pour différentes classes de température $T_D$ du détecteur ou Ts du système.

**4.** Procédé de maintenance selon la revendication précédente, **caractérisé en ce que** chaque classe de température fait l'objet de calculs indépendants.

**5.** Procédé de maintenance selon l'une des revendications précédentes, **caractérisé en ce que** la dérive du TMF est une fonction linéaire de « nb-cycles ».

**6.** Caméra thermique équipée :

- d'un détecteur-refroidisseur qui comprend :

i. une machine à froid (3),
ii. un cryostat (2),
iii. un détecteur IR (1) placé dans le cryostat,
iv. un premier capteur (8) de la température $T_D$ du détecteur IR,

- d'un deuxième capteur (9) de la température $T_S$ interne à la caméra,
- d'une carte de traitement (7) qui comporte des moyens d'asservissement (4) de la machine à froid en fonction de la température $T_D$, et des moyens de mise en oeuvre du procédé de maintenance de ladite caméra selon l'une des revendications précédentes.

## Patentansprüche

**1.** Wartungsverfahren einer Wärmekamera, die ausgestattet ist mit:

- einem Sensor-Kühler, der aufweist:

i. eine Kältemaschine (3),
ii. einen Kryostaten (2),
iii. einen IR-Sensor (1), der in dem Kryostaten positioniert ist,
iv. einen ersten Sensor (8) für die Temperatur $T_D$ des IR-Sensors,

- einer Verarbeitungskarte (7), die Mittel zum Steuern (4) der Kältemaschine in Abhängigkeit von der Temperatur $T_D$ aufweist,

**dadurch gekennzeichnet, dass** es eine Anzahl "nb-cycles" (Anz.-Zyklen) von Kältezyklen der Kältemaschine (3) aufweist, die als "Marche-Arrêt"- (Ein-Aus) Zyklen bezeichnet werden wobei jeder Zyklus die folgenden Stufen aufweist:

- Berechnung der Innentemperatur $T_S$ in der Kamera mithilfe eines zweiten Sensors (9) für die Innentemperatur $T_S$ in der Kamera,
- und Berechnung der Kühlzeit TMF über die Verarbeitungskarte ausgehend von den Temperaturen $T_D$ und Ts,

und am Ende dieser "nb-cycles" "Marche-Arret"-Zyklen:

- eine Stufe zum Berechnen durch die Verarbeitungskarte:

○ der Entwicklung der Abdrift der Kühlzeit TMF in Abhängigkeit von "nb-cycles",

○ einer Anzahl von "Marche-Arrêt"-Zyklen vor einer Betriebsstörung in Abhängigkeit von der Entwicklung der Abdrift der TMF in Bezug auf eine maximale vorbestimmte, für eine Betriebsstörung repräsentative TMF,

- eine Stufe zum Speichern der in den Berechnungen verwendeten Daten, wobei diese Daten kumulierte Daten und nicht die Temperaturmessungen $T_D$ und $T_S$ und auch nicht die TMF sind.

2. Wartungsverfahren nach dem vorhergehenden Anspruch, **dadurch gekennzeichnet, dass** es bei jedem "Marche-Arrêt"-Zyklus des Sensor-Kühlers eine Stufe zum Berechnen des Produkts der TMF mit der Nummer des Zyklus aufweist, und am Ende der "nb-cycles"-Zyklen eine Stufe zum Speichern der folgenden kumulierten Daten:

- "nb-cycles",
- die Summe der TMF auf die berücksichtigte Anzahl der "nb-cycles"-Zyklen,
- die Summe der Produkte der TMF mit der Nummer des Zyklus.

3. Wartungsverfahren nach einem der vorhergehenden Ansprüche, **dadurch gekennzeichnet, dass** die Stufen für verschiedene Temperaturklassen $T_D$ des Sensors oder Ts des Systems wiederholt werden.

4. Wartungsverfahren nach dem vorhergehenden Anspruch, **dadurch gekennzeichnet, dass** jede Temperaturklasse Gegenstand von unabhängigen Berechnungen ist.

5. Wartungsverfahren nach einem der vorhergehenden Ansprüche, **dadurch gekennzeichnet, dass** die Abdrift der TMF eine lineare Funktion von "nb-cycles" ist.

6. Wärmekamera, ausgestattet mit:

- einem Sensor-Kühler, der aufweist:

i. eine Kältemaschine (3),
ii. einen Kryostaten (2),
iii. einen IR-Sensor (1), der in dem Kryostaten positioniert ist,
iv. einen ersten Sensor (8) für die Temperatur $T_D$ des IR-Sensors,

- einem zweiten Sensor (9) für die Innentemperatur $T_S$ in der Kamera,
- einer Verarbeitungskarte (7), die Mittel zum Steuern (4) der Kältemaschine in Abhängigkeit von der Temperatur $T_D$ und Mittel zum Umsetzen des Wartungsverfahrens der Kamera nach einem der vorhergehenden Ansprüche aufweist.

**Claims**

1. A method for maintaining a thermal camera equipped with:

- a detector-cooler comprising:

i. a cooling machine (3);
ii. a cryostat (2);
iii. an IR detector (1) placed in the cryostat;
iv. a first sensor (8) for the temperature $T_D$ of the IR detector;

- a processing card (7) comprising means (4) for servo-controlling the cooling machine as a function of the temperature $T_D$;

**characterised in that** it comprises a number of cycles, "nb-cycles", denoted "on-off" cycles, for cooling the cooling machine (3), with the following steps for each cycle:

- computing the temperature $T_S$ inside the camera by means of a second sensor (9) for the temperature $T_S$ inside the camera; and
- computing, by the processing card, the cooling time TMF on the basis of the temperatures $T_D$ and Ts;

and, on completion of said "nb-cycles" denoted "on-off" cycles:

- a step of computing the following by the processing card:

○ the trend of the drift of the cooling time TMF as a function of "nb-cycles";
○ a number of "on-off" cycles before breakdown, as a function of said trend of the drift of the TMF compared to a maximum predetermined TMF representing a breakdown;

- a step of storing data used in said computations, said data being cumulative data and not the temperature measurements $T_D$ and $T_S$ or said TMF.

2. The maintenance method according to the preceding claim, **characterised in that** for each "on-off" cycle of the detector-cooler it comprises a step of computing the product of the TMF by the number of the cycle and, on completion of the "nb-cycles", a step of storing the following cumulative data:

- "nb-cycles";
- the sum of the TMF on the considered number of cycles, "nb-cycles";
- the sum of the products of the TMF by the cycle number.

3. The maintenance method according to any one of the preceding claims, **characterised in that** the steps are repeated for various classes of temperature $T_D$ of the detector or $T_S$ of the system.

4. The maintenance method according to the preceding claim, **characterised in that** each class of temperature is subject to independent computations.

5. The maintenance method according to any one of the preceding claims, **characterised in that** the drift of the TMF is a linear function of "nb-cycles".

6. A thermal camera equipped with:

- a detector-cooler comprising:

i. a cooling machine (3);
ii. a cryostat (2);
iii. an IR detector (1) placed in the cryostat;
iv. a first sensor (8) for the temperature $T_D$ of the IR detector;

- a second sensor (9) for the temperature $T_S$ inside the camera;
- a processing card (7) comprising means (4) for servo-controlling the cooling machine as a function of the temperature $T_D$, and means for implementing the method for maintaining said camera according to any one of the preceding claims.

FIG.1

FIG.2

| Mesure $T_D$ | Mesure $T_S$ | *Etape A* |

Non ← $T_D > 100K$     *Etape B*

Oui

| Mesure du TMF de -173°C à -190°C | *Etape C* |

| Sélectionner tableau $T_D$ (par 5°C) | *Etape D* |

| Nb_cycles =Nb_cycles + 1 (ajouter une occurrence) | *Etape E* |

| Calculer et sauver TMF_TOT=TMF_TOT + TMF <br> N°cycle.TMF_TOT= N°cycle.TMF_TOT+N°cycle.TMF * | *Etape F* |

\* pour calcul potentiel (moindres carrés)

| Mesure rejetée |

| Calculer TMF_MOY=TMF_TOT/Nb_cycles <br> Pente TMF = Cov (TMF, Nb_cycles)/Var (Nb_cycles) <br> et TMF à l'origine | *Etape G* |

| Calculer nb de cycles avant défaut TMF | *Etape H* |

| Affichage N°cycle/nb cycles avant défaut | *Etape I* |

FIG.3

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5734593 A
- JP 6307924 A
- US 6016659 A